# EUROPÄISCHE PATENTSCHRIFT

(11) **EP 2 675 631 B1**
(45) Veröffentlichungstag und Bekanntmachung des Hinweises auf die Patenterteilung: **07.01.2015**
(21) Anmeldenummer: 12704080.6
(22) Anmeldetag: 15.02.2012
(51) Int. Cl.: B60B 1/06, B60B 3/14, B60B 5/02, B60B 30/06

(54) **FAHRZEUGRAD**
VEHICLE WHEEL
ROUE DE VÉHICULE

(30) Priorität: 17.02.2011 EP 11154876; 25.08.2011 EP 11178837; 25.11.2011 EP 11190682
(43) Veröffentlichungstag der Anmeldung: 25.12.2013
(73) Patentinhaber: BASF SE, 67056 Ludwigshafen (DE)
(72) Erfinder: BOHRMANN, Gerhard, 67459 Böhl-Iggelheim (DE); GLEITER, Uwe, 67434 Neustadt (DE); HESS, Heiko, 67742 Lauterecken (DE); RAU, Walter, 68165 Mannheim (DE); WENIGMANN, Sven, 68167 Mannheim (DE); SCHNORR, Jörg, 67071 Ludwigshafen (DE); BARTHOLOMEYZIK, Willi, 67454 Hassloch (DE)
(86) Internationale Anmeldenummer: PCT/EP2012/052599
(87) Internationale Veröffentlichungsnummer: WO 2012/110560

(56) Entgegenhaltungen:
- EP-A1- 0 529 492
- DE-A1- 4 202 287
- DE-A1- 10 006 400
- DE-A1- 19 608 601
- DE-A1- 19 940 524
- US-A- 3 870 371

## Beschreibung

Die Erfindung betrifft ein Fahrzeugrad, umfassend eine Felge aus einem Kunststoffmaterial.

Derzeit werden Felgen für Fahrzeugräder, insbesondere für Kraftfahrzeuge aus metallischen Werkstoffen, üblicherweise aus Stahl oder Aluminium gefertigt. Die Felge wird mit Kugelkopfschrauben oder Kegelkopfschrauben an einer Radhalterung, üblicherweise einer Bremstrommel oder Bremsscheibe des Kraftfahrzeugs befestigt. Hierdurch wird die Felge gegen die Halterung gepresst und die Kraftübertragung vom Antrieb des Fahrzeugs an die Felge wird durch Reibung zwischen der Felge und der Anlagefläche der Felge an der Bremstrommel oder der Bremsscheibe realisiert.

Zur Reduzierung des Verbrauchs des Kraftfahrzeugs und damit zur Energieeinsparung, soll das Gewicht des Fahrzeugs reduziert werden. Hierzu wird zum Beispiel angestrebt, möglichst viele Komponenten des Fahrzeugs aus Werkstoffen mit geringem Gewicht, beispielsweise aus Kunststoffen, zu fertigen und die derzeitigen metallischen Werkstoffe durch Kunststoffe zu ersetzen.

Aus DE-U 297 06 229 ist es bereits bekannt, Felgen für ein Kraftfahrzeug aus einem faserverstärkten Kunststoff zu fertigen. Aufgrund der großen Kräfte, die an die Felge übertragen werden, neigt der Kunststoff der Felge jedoch zum Kriechen, was zu einer Verformung der Felge führt. Hierbei ist auch die Verstärkung aus Fasern nicht ausreichend, um das Kriechen und die damit verbundene Verformung zu verhindern. Zudem führt ein zu großer Anteil an Fasern, der eine ausreichende Festigkeit bezüglich der Kriechneigung gewährleisten würde, dazu, dass der Werkstoff, aus dem die Felge gefertigt wird zu spröde wird und damit den Belastungen beim Fahren mit dem Kraftfahrzeug nicht standhält. Dies zeigt sich durch Risse in der Felge, die bis zum Bruch führen können.

Das gattungsbildende Dokument DE 10006400 A1 offenbart ein Fahrzeugrad mit Kunststoffelge einer Radhalterung sowie mehrere Adapter zur Befestigung der Felge an der Radhalterung.

Aufgabe der vorliegenden Erfindung ist es daher, ein Fahrzeugrad mit einer Felge aus einem Kunststoffmaterial und eine Halterung bereitzustellen, bei der die Kraft auf die Felge übertragen werden kann, ohne dass das Kunststoffmaterial der Felge beginnt zu kriechen und bei der das Kunststoffmaterial zusätzlich so elastisch ist, dass dieses nicht reißt oder bricht.

Gelöst wird die Aufgabe durch ein Fahrzeugrad mit den Merkmalen des Anspruchs 1.

Im Rahmen der vorliegenden Erfindung wird unter dem Begriff "Felge" ein Rad für ein Kraftfahrzeug ohne Reifen verstanden. Die Felge umfasst somit das Felgenband mit dem Felgenbett zur Aufnahme des Reifens sowie den Felgenstern oder die Radscheibe beziehungsweise Radschüssel.

Der Einsatz des mindestens einen Adapters mit mindestens einer Erhebung, die in eine entsprechende Vertiefung der Felge eingreift, oder mindestens eines Adapters, der vollflächig in eine Vertiefung der Felge eingreift, ermöglicht eine Kraftübertragung durch Reibung auf den Adapter und durch Formschluss an den in die Vertiefungen eingreifenden Erhebungen. Hierdurch wird keine Kraft durch Reibung direkt auf die Felge übertragen und die Verformung der Felge durch Kriechen im Bereich der Befestigungseinrichtungen wird soweit reduziert, dass es für die Funktion der Felge nicht mehr schädlich ist. Zudem ist es möglich, einen Kunststoff mit geringerem Anteil an Fasern zur Verstärkung einsetzen, so dass die für die Felge notwendige Elastizität des Werkstoffs erhalten bleibt.

Es wird bevorzugt, jeden Adapter mit nur einer Erhebung zu gestalten. Die Adapter sind erfindungsgemäß als Kreissegment oder als Ringsegment gestaltet. Weiterhin ist es bei Einsatz mehrerer Adapter auch möglich und bevorzugt, alle Adapter so zu gestalten, dass diese vollflächig in jeweils eine der Form des Adapters angepasste Vertiefung der Felge eingreifen. Besonders bevorzugt ist es hierbei, wenn die Vertiefungen jeweils so gestaltet sind, dass der in die Vertiefung eingreifende Adapter vollständig in die Vertiefung eingelegt werden kann, wobei hierbei weiterhin bevorzugt ist, wenn der Adapter flächenbündig mit der Oberfläche der Felge abschließt.

Wenn der Adapter so gestaltet ist, dass dieser nach der Montage außen auf der Felge aufliegt, ist es bevorzugt, wenn auf der zur Radhalterung weisenden Seite der Felge eine Scheibe angeordnet ist, die durch mindestens eine Öffnung in der Felge mit dem Adapter verbunden ist. Durch den Einsatz der Scheibe wird eine zusätzliche Verstärkung der Felge erzielt. Zudem liegt die Felge nach der Montage nicht direkt mit dem Kunststoff auf der Radhalterung auf, so dass hierdurch die Haltbarkeit der Felge im Betrieb verbessert wird. Insbesondere kann hierdurch vermieden werden, dass die Felge aufgrund der im Betrieb wirkenden Kräfte beginnt zu fließen.

In einer besonders bevorzugten Ausführungsform weist die Scheibe einen umlaufenden Rand auf, der nach Montage in Kontakt mit der Radhalterung ist. Hierdurch wird eine gleichmäßige Kraftverteilung von der Radhalterung auf die Felge erreicht. Dies führt insbesondere dazu, dass Spannungen und damit auftretende Schädigungen der Felge vermieden werden können. Der umlaufende Rand, mit dem die Scheibe auf der Radhalterung aufliegt, wird zum Beispiel durch eine konische Gestaltung der der Radhalterung zuweisenden Seite der Scheibe erzielt. Neben einer konischen Gestaltung ist jedoch zum Beispiel auch eine konkave Gestaltung der Scheibe denkbar. Alternativ wäre es auch möglich, eine umlaufende Erhebung auf der Scheibe vorzusehen. Bevorzugt ist es jedoch, die Scheibe auf der der Radhalterung zuweisenden Seite konisch auszubilden. Hierbei ist es möglich, die Scheibe auf einer Seite konisch und auf der gegenüberliegenden Seite eben zu gestalten. Alternativ kann auch die gesamte Scheibe konisch gestaltet sein.

Um Kraft vom Adapter auf die Scheibe und/oder die Radhalterung übertragen zu können, ist es weiterhin bevorzugt, wenn in der mindestens einen Öffnung eine Hülse aufgenommen ist, die mit einer Stirnseite am Adapter anliegt oder passgenau in einer Öffnung des Adapters aufgenommen ist und mit der anderen Stirnseite an der Radhalterung oder an der Scheibe anliegt oder passgenau in einer Öffnung der Radhalterung oder der Scheibe aufgenommen ist. Die Hülse ist dabei vorzugsweise aus dem gleichen Material gefertigt wie der Adapter. In einer Ausführungsform der Erfindung ist die Hülse einteilig mit dem Adapter ausgebildet. Alternativ ist es auch möglich, die Hülse einteilig mit der Scheibe oder der Radhalterung auszubilden. Bei einer einteiligen Gestaltung der Hülse mit dem Adapter liegt die Hülse mit ihrem vom Adapter entfernten Ende vorzugsweise an der Radhalterung oder der Scheibe an oder ist passgenau in einer Öffnung der Scheibe oder der Radhalterung aufgenommen. Entsprechend liegt bei einer einteiligen Gestaltung der Hülse mit der Radhalterung oder der Scheibe das von Radhalterung beziehungsweise Scheibe weg weisende Ende der Hülse auf dem Adapter auf oder ist in einer Öffnung des Adapters passgenau aufgenommen. Passgenau im Sinne der Erfindung bedeutet dabei, dass die Hülse über ihren gesamten Umfang spielfrei an der Öffnung anliegt.

Die Hülse ist vorzugsweise so gestaltet, dass diese zur Aufnahme einer Schraube zur Montage der Felge an der Radhalterung ausgebildet ist. In diesem Fall dient die Hülse gleichzeitig zur Kraftübertragung von den Schrauben, mit denen die Felge an der Radhalterung befestigt wird. Im Bereich der Durchgangsöffnungen für die Schrauben zur Befestigung der Felge an der Radhalterung ist der Adapter bei außen liegendem Adapter vorzugsweise so gestaltet, dass in dem Adapter eine Vertiefung ausgebildet ist, so dass zur Montage der Felge Kugelbundschrauben oder Kegelbundschrauben genutzt werden können, wie diese auch derzeit zur Montage von Stahlfelgen oder Aluminiumfelgen eingesetzt werden.

Alternativ zum Einsatz von nur einer Scheibe ist es auch möglich, mehrere Scheiben zu nutzen. Hierbei kann zum Beispiel an jeder Position einer Schraube zur Montage der Felge an der Radhalterung eine Scheibe vorzusehen. Auch ist es möglich, die Scheibe so zu gestalten, dass mehrere Schrauben, beispielsweise zwei Schrauben oder drei Schrauben jeweils durch eine Scheibe geführt werden. Der Einsatz mehrerer Scheiben ist insbesondere möglich, wenn mehrere Adapter eingesetzt werden. In diesem Fall kann zum Beispiel jedem Adaptereine Scheibe zugeordnet sein. Alternativ ist es auch möglich, mehreren Adaptern jeweils eine Scheibe zuzuordnen. Bevorzugt ist jedoch der Einsatz nur einer Scheibe, die vorzugsweise als Ring gestaltet ist.

In einer alternativen Ausführungsform liegt der Adapter mit einer ersten Fläche an der Radhalterung an und die Erhebungen sind auf der der ersten Fläche gegenüberliegenden Seite ausgebildet, so dass der Adapter zwischen Radhalterung und Felge positioniert ist.

In einer weiteren alternativen Ausführungsform liegt der Adapter mit einer ersten Fläche an der Radhalterung an und wird durch mindestens eine Öffnung der Felge geführt, wobei am Adapter eine scheibenförmige Erweiterung auf der der Radhalterung abgewandten Seite ausgebildet ist und an der scheibenförmigen Erweiterung die Erhebungen so ausgebildet sind, dass diese in Richtung der Radhalterung weisen und in Vertiefungen an der Außenseite der Felge eingreifen. Der Adapter kann dabei durch mehrere Öffnungen in der Felge geführt werden. Bevorzugt ist es jedoch, wenn in der Felge eine zentrale Öffnung ausgebildet ist, durch die der Adapter geführt wird.

Sowohl bei der Ausführungsform, bei der der Adapter zwischen Felge und Radhalterung positioniert ist als auch bei der Ausführungsform, bei der eine Scheibe des Adapters außen an der Felge anliegt und der Adapter durch mindestens eine Öffnung der Felge geführt ist, kann der Adapter mit der Radhalterung verbunden werden und die Felge durch separate Befestigungsmittel mit dem Adapter. Bevorzugt ist jedoch in beiden Fällen, die Felge und den Adapter gemeinsam mit der Radhalterung zu verbinden.

Neben der Ausführungsform, bei der der Adapter einteilig mit der Radhalterung ausgebildet ist und, und der Ausführungsform, bei der der Adapter ein separates Bauteil ist, ist es auch möglich, den Adapter und die Felge einteilig zu gestalten. Hierbei ist vorzugsweise der Adapter vom Kunststoffmaterial der Felge umschlossen. Wenn die Felge durch ein Spritzgussverfahren oder ein anderes Gießverfahren hergestellt wird, ist es bevorzugt, wenn der Adapter von dem Felgenmaterial umgossen wird. Dies hat den Vorteil, dass der Adapter fest in die Felge eingebunden werden kann. Eine noch bessere Verbindung von Adapter und Felge kann erreicht werden, wenn der Adapter einen Hinterschnitt aufweist. In diesem Fall wird Kunststoffmaterial in den Hinterschnitt gegossen und so eine stabile Verbindung erhalten. Weiterhin kann die Verbindung von Kunststoffmaterial und Adapter durch eine Bearbeitung der Adapteroberfläche, beispielsweise Aufrauen der Adapteroberfläche, Rändelung der Adapteroberfläche oder durch Auftragen eines Haftvermittlers auf die Adapteroberfläche oder auf das Kunststoffmaterial verbessert werden.

Wenn der Adapter einteilig mit der Felge verbunden ist, ist es möglich, einen einzelnen Adapter oder mehrere Adapterteile vorzusehen, die mit der Felge verbunden sind. Wenn mehrere Adapterteile vorgesehen sind, so sind diese vorzugsweise gleichmäßig verteilt über den Umfang der Felge angeordnet, um eine gleichmäßige Kraftübertragung von der Radhalterung an die Felge zu gewährleisten.

In einer besonders bevorzugten Ausführungsform bei einteiliger Gestaltung von Felge und Adapter werden die in den Schraubendurchgangsbohrungen enthaltenen Buchsen als Adapter genutzt. Hierzu werden vorzugsweise Buchsen eingesetzt, die eine Wanddicke aufweisen, die ausreichend groß ist, um die Reibungskräfte für den Antrieb und zum Bremsen von der Radhalterung an die Felge zu übertragen. Alternativ ist es auch möglich, Buchsen einzusetzen, die zumindest einseitig eine tellerförmige Erweiterung aufweisen. Die tellerförmige Erweiterung ist dabei bündig mit der Felgenoberfläche ausgebildet, so dass bei Montage der Felge auf der Radhalterung die tellerförmige Erweiterung an der Radhalterung anliegt, so dass über die tellerförmige Erweiterung die Kraft von der Radhalterung an die Felge übertragen wird.

Alternativ ist es auch möglich, die Buchsen in den Schraubendurchgangsbohrungen und den Adapter einteilig zu fertigen. In diesem Fall wirken die Buchsen unterstützend bei der Kraftübertragung, stellen jedoch nicht die Hauptkraftübertragungsflächen des Adapters.

Zur Erhöhung der Stabilität und Festigkeit der Felge sind In einer Ausführungsform am Adapter Abschnitte ausgebildet, die sich in Richtung der Speichen der Felge erstrecken. Wenn mehrere Adapter vorgesehen sind, so weisen vorzugsweise Adapter, die in Verlängerung einer Speiche positioniert sind, einen entsprechenden Abschnitt auf, der sich in Richtung der Speiche erstreckt. Der sich in Richtung der Speiche erstreckende Abschnitt kann dabei die gleiche Dicke aufweisen wie der Adapter oder auch in einer geringeren Wandstärke ausgebildet sein. Wenn der Abschnitt in einer geringeren Wandstärke ausgebildet ist, so ist es bevorzugt, wenn der Übergang von der Dicke des Adapters zur Dicke des Abschnittes stetig verläuft.

Bei einer einteiligen Gestaltung des Adapters mit der Radhalterung sind die Erhebungen, die in die Vertiefungen der Felge eingreifen, direkt auf der Radhalterung ausgebildet. Hierdurch entfällt die Kraftübertragung durch Reibung auf den Adapter. Die Kraftübertragung an die Felge erfolgt auch in dieser Ausführungsform durch Formschluss an den in die Vertiefungen eingreifenden Erhebungen der Radhalterung.

Wenn der Adapter einteilig mit der Felge ausgebildet ist, wird die Kraft vom Adapter auf die Felge ebenfalls durch Formschluss übertragen. Die Kraft, die von der Felge an den Adapter übertragen wird, wird durch Reibung von der Radhalterung an die auf der Radhalterung aufliegende Fläche des Adapters übertragen. Eine einteilige Ausbildung des Adapters mit der Felge wird zum Beispiel dadurch erzielt, dass der Adapter bei der Herstellung der Felge mit dem Polymermaterial, aus dem die Felge gefertigt wird, umspritzt wird.

Um die Kraft an den Erhebungen vom Adapter an die Felge optimal übertragen zu können, ist es bevorzugt, wenn die Erhebungen des Adapters und die Vertiefungen der Felge jeweils konisch ausgebildet sind, so dass die Erhebungen des Adapters bei der Montage in die Vertiefungen der Felge gepresst werden. Hierdurch wird ein spielfreier Sitz der Felge auf dem Adapter gewährleistet.

Um den spielfreien Sitz bei der Montage zu erhalten, sind die Erhebungen auf dem Adapter vorzugsweise so bemessen, dass sich beim Ansetzen der Felge ein Spalt zwischen der Felge und dem Adapter ausbildet. Beim Anziehen der Schrauben, mit denen die Felge am Adapter befestigt wird, werden die Erhebungen in die Vertiefungen gepresst und der spielfreie Sitz erzeugt. Durch den Spalt wird eine Vorspannung auf die konische Kontaktfläche von Erhebung und Vertiefung erzeugt.

Zur Montage bei separatem Adapter ist es möglich, zunächst den Adapter mit der Radhalterung zu verbinden und anschließend die Felge am Adapter zu befestigen. Die Verbindung von Adapter mit Radhalterung und von Felge mit Adapter erfolgt vorzugsweise jeweils durch eine Verschraubung. Alternativ und bevorzugt ist es jedoch, die Felge und den Adapter gemeinsam mit der Radhalterung zu verbinden. Hierzu sind üblicherweise Schraubendurchgangsbohrungen in der Felge und im Adapter vorgesehen und an entsprechenden Positionen Bohrungen mit Innengewinde in der Radhalterung. Zur Befestigung werden Schrauben durch die Schraubendurchgangsbohrungen in Felge und Adapter geführt und in das Innengewinde der Radhalterung eingeschraubt. Als Schrauben zur Befestigung werden vorzugsweise Flanschschrauben mit einem flachen Kopf verwendet, der auf der Felge und der Hülse beziehungsweise dem Adapter aufliegt.

Alternativ zu Schrauben, die durch die Felge und den Adapter geführt und in Bohrungen mit Innengewinde in der Radhalterung verschraubt werden, ist es auch möglich, an der Radhalterung Gewindebolzen vorzusehen, die durch die Schraubendurchgangsbohrungen in Adapter und Felge geführt und anschließend mit geeigneten Muttern fixiert werden.

Um bei der Verschraubung der Felge zu vermeiden, dass die Felge aufgrund der Schraubenkräfte im Bereich der Schraubendurchgangsbohrungen beschädigt wird, ist es bevorzugt, in den Schraubendurchgangsbohrungen Buchsen einzulegen. Die Buchsen sind dabei vorzugsweise aus einem gegenüber Druck stabilen Material gefertigt. Als Material für die Buchsen eignet sich dasselbe Material wie das für den Adapter. Besonders bevorzugt als Material für die Buchsen sind Metalle, insbesondere eisenbasierte Metalle wie Grauguss oder Stahl.

Wenn der Adapter einteilig mit der Radhalterung ausgebildet ist, ist der Adapter vorzugsweise aus dem gleichen Material wie die Radhalterung gefertigt. Die Radhalterung ist dabei zum Beispiel an einer Bremstrommel oder an einer Bremsscheibe eines Kraftfahrzeugs ausgebildet. Alternativ kann die Radhalterung auch an einem Elektromotor, der das Fahrzeugrad direkt antreibt, ausgebildet sein. Als Material für die Radhalterung werden üblicherweise Metalle, bevorzugt eisenhaltige Metalle, besonders bevorzugt Stahl eingesetzt.

Bei einem einteilig mit der Radhalterung ausgebildeten Adapter weist die Radhalterung Erhebungen auf, die in korrespondierende Vertiefungen der Felge eingreifen. Im Unterschied zu einem separaten Adapter, bei dem die Felge samt Adapter an herkömmlichen Radhalterungen angebracht werden kann, sind hier die Radhalterung und die Felge aufeinander abgestimmt, so dass nur Felgen verwendet werden können, die zu den Erhebungen auf der Radhalterung korrespondierende Vertiefungen aufweisen.

Bei einem separaten Adapter wird dieser vorzugsweise aus einem Material gefertigt, das eine Kraftübertragung durch Reibung zwischen Radhalterung und Adapter ermöglicht. Geeignete Materialien für den Adapter sind zum Beispiel metallische Werkstoffe, Keramiken oder hochgefüllte Kunststoffe. Besonders geeignet als Material für den Adapter sind Metalle, vorzugsweise Aluminium, Eisen, Titan oder Magnesium, wobei die Metalle auch als Mischungen oder in Form von Legierungen vorliegen können. Wenn Eisen eingesetzt wird, so liegt dieses vorzugsweise als Stahl vor. Der Adapter ist dabei zum Beispiel aus einem tiefgezogenen Stahlblech gefertigt. Alternativ kann der Adapter aus Eisen auch als Eisengussteil gefertigt sein. Hierbei kann das Eisen sowohl als Stahlguss als auch als Grauguss eingesetzt werden.

Geeignete Keramiken, aus denen der Adapter gefertigt werden kann, sind zum Beispiel Keramiken auf Basis von Aluminiumoxid oder Siliziumoxid.

Wenn ein Kunststoff als Material für den Adapter verwendet wird, so sind hochverstärkte duroplastische Kunststoffe besonders bevorzugt. Im Unterschied zu thermoplastischen Kunststoffen und nur niedrigverstärkten Kunststoffen neigen hochverstärkte Kunststoffe weniger stark zum Kriechen bei Aufbringen einer Reibkraft. Da zudem die Kräfte von der Straße von der Felge aufgenommen werden, kann für den Adapter ein spröderer Werkstoff eingesetzt werden als für die Felge.

Bevorzugt wird das Material für die Felge und den Adapter so ausgewählt, dass sich die thermischen Längenausdehnungskoeffizienten des Materials für die Felge und des Materials für den Adapter um nicht mehr als 70%, bevorzugt um nicht mehr als 60% unterscheiden, bezogen auf den thermischen Längenausdehnungskoeffizienten des Materials für den Adapter. Wenn als Material für den Adapter und/oder für die Felge ein Kunststoffmaterial eingesetzt wird, so soll die vorstehende Bedingung für einen Temperaturbereich von 100 bis 180°C gelten. Wenn ein faserverstärktes Kunststoffmaterial als Material für die Felge und/oder den Adapter eingesetzt wird, so soll die Bedingung für einen Temperaturbereich von 100 bis 180°C und eine Längenausdehnung parallel zur Faser, das heißt in Faserrichtung, gelten.

Als Material für die Felge wird ein duroplastischer oder ein thermoplastischer Kunststoff eingesetzt. Dieser kann gefüllt oder ungefüllt eingesetzt werden. Bevorzugt werden jedoch gefüllte Polymere verwendet.

Als Polymere eignen sich zum Beispiel natürliche und synthetische Polymere oder deren Derivate, Naturharze sowie synthetische Harze und deren Derivate, Proteine, Cellulose-Derivate und dergleichen. Diese können - müssen jedoch nicht - chemisch oder physikalisch härtend, beispielsweise luftaushärtend, strahlungshärtend oder temperaturhärtend, sein.

Neben Homopolymeren können auch Copolymere oder Polymergemische eingesetzt werden.

Bevorzugte Polymere sind ABS (Acrylnitril-Butadien-Styrol); ASA (Acrylnitril-Styrol-Acrylat); acrylierte Acrylate; Alkydharze; Alkylenvinylacetate; Alkylenvinylacetat-Copolymere, insbesondere Methylenvinylacetat, Ethylenvinylacetat, Butylenvinylacetat; Alkylenvinylchlorid-Copolymere; Aminoharze; Aldehyd- und Ketonharze; Cellulose und Cellulose-Derivate, insbesondere Hydroxyalkylcellulose, Celluloseester, wie -acetate, - propionate, -butyrate, Carboxyalkylcellulosen, Cellulosenitrate; Epoxyacrylate; Epoxidharze; modifizierte Epoxidharze, zum Beispiel bifunktionelle oder polyfunktionelle Bisphenol-A- oder Bisphenol-F-Harze, Epoxy-Novolak-Harze, bromierte Epoxidharze, cycloaliphatische Epoxidharze; aliphatische Epoxidharze, Glycidether, Vinylether, Ethylenacrylsäurecopolymere; Kohlenwasserstoffharze; MABS (transparentes ABS mit Acrylat-Einheiten enthaltend); Melaminharze; Maleinsäureanhydridcopolymerisate; (Meth)acrylate; Naturharze; Kolophoniumharze; Schellack; Phenolharze; Polyester; Polyesterharze, wie Phenylesterharze; Polysulfone (PSU); Polyethersulfone (PESU); Polyphenylensulfon (PPSU); Polyamide; Polyimide; Polyaniline; Polypyrole; Polybutylenterephthalat (PBT); Polycarbonate (zum Beispiel Makrolon^{®} der Bayer AG); Polyesteracrylate; Polyetheracrylate; Polyethylen; Polyethylenthiophene; Polyethylennaphthalate; Polyethylenterephthalate (PET); Polyethylenterephthalat-Glykol (PETG); Polypropylen; Polymethylmethacrylat (PMMA); Polyphenylenoxid (PPO); Polyoxymethylen (POM); Polystyrole (PS); Polytetrafluorethylen (PTFE); Polytetrahydrofuran; Polyether (zum Beispiel Polyethylenglykol, Polypropylenglykol); Polyvinyl-Verbindungen, insbesondere Polyvinylchlorid (PVC), PVC-Copolymere, PVdC, Polyvinylacetat sowie deren Copolymere, gegebenenfalls teilhydrolisierter Polyvinylalkohol, Polyvinylacetale, Polyvinylacetate, Polyvinylpyrrolidon, Polyvinylether, Polyvinylacrylate und -methacrylate in Lösung und als Dispersion sowie deren Copolymere, Polyacrylsäureester und Polystyrolcopolymere; Polystyrol (schlagfest oder nicht schlagfest modifiziert); Polyurethane, unvernetzte bzw. mit Isocyanaten vernetzt; Polyurethanacrylate; Stryrol-Acrylnitril (SAN); Styrol-Acryl-Copolymere; Styrol-Butadien-Blockcopolymere (zum Beispiel Styroflex^{®} oder Styrolux^{®} der BASF SE, K-Resin^{™} der TPC); Proteine, zum Beispiel Casein; SIS; Triazin-Harz, Bismaleimid-Triazin-Harz (BT), Cyanatester-Harz (CE), allylierter Polyphenylen-Ether (APPE). Weiterhin können Mischungen zweier oder mehrerer Polymere eingesetzt werden.

Besonders bevorzugte Polymere sind Acrylate, Acrylatharze, Cellulose-Derivate, Methacrylate, Methacrylatharze, Melamin- und Aminoharze, Polyalkylene, Polyimide, Epoxidharze, modifizierte Epoxidharze, zum Beispiel bifunktionelle oder polyfunktionelle Bisphenol-A- oder Bisphenol-F-Harze, Epoxy-Novolak-Harze, bromierte Epoxid-Harze, cycloaliphatische Epoxid-Harze; aliphatische Epoxid-Harze, Glycidether, Cyanatester, Vinylether, Phenolharze, Polyimide, Melaminharze und Aminoharze, Polyurethane, Polyester, Polyvinylacetale, Polyvinylacetate, Polystyrole, Polystyrol-Copolymere, Polystyrolacrylate, Styrol-Butadien-Blockcopolymere, Styrol-Acrylnitril-Copolymere, Acrylnitril-Butadien-Styrol, Acrylnitril-Styrol-Acrylat, Polyoxymethylen, Polysulfone, Polyethersulfone, Polyphenylensulfon, Polybutylenterephthalat, Polycarbonate, Alkylenvinylacetate und Vinylchlorid-Copolymere, Polyamide, Cellulose-Derivate sowie deren Copolymere und Mischungen zweier oder mehrerer dieser Polymere.

Insbesondere bevorzugte Polymere sind Polyamide, beispielsweise Polyamid 4, Polyamid 6, Polyamid 11, Polyamid 12, Polyamid 4.6, Polyamid 6.6, Polyamid 6.10, Polyamid 6.12, Polyamid 10.10, Polyamid 12.12, Polyamid MXD.6, Polyamid 6/6.6, Polyamid 6/12, Polyamid 6.6/6/6.10, Polyamid PACM.12, Polyamid 12/MACM.I, sowie Polyphthalamide, das heißt Polyamide, deren Dicarbonsäurekomponente mindestens 50 Gew.-% Terephthal- und/oder Isophthalsäure enthält. Dabei sind besonders bevorzugt Polyamid 4.6, Polyamid 6, Polyamid 6.6, Polyamid 6.T/6, Polyamid 6.T/6.1, Polyamid 6.T/6.1/6.6, Polyamid 10.T/6.T, Polyamid 6.6/6.10, Polyamid 6.6/6.12, Polyamid 6.T/11, Polyamid 6.T/12, Polyamid 6.T/5-1.T, Polyamid 9.T/8-1.T und Mischungen aus diesen. Weitere geeignete Polymere sind Polypropylen, Polysulfone, Polyethersulfone, Polyphenylensulfone, Polybutylenterephthalat sowie deren Mischungen.

Den einzelnen Polymeren können übliche Additive, zum Beispiel Weichmacher, Vernetzer, Schlagzäh-Modifier oder Flammschutzmittel beigemischt werden.

Das Polymermaterial ist vorzugsweise verstärkt. Insbesondere ist das Polymermaterial faserverstärkt. Zur Verstärkung kann jede beliebige, dem Fachmann bekannte, zur Verstärkung übliche Faser verwendet werden. Geeignete Fasern sind zum Beispiel Glasfasern, Kohlenstofffasern, Aramidfasern, Borfasern, Metallfasern, Mineralfasern oder Kaliumtitanatfasern. Die Fasern können in Form von Kurzfasern, Langfasern oder Endlosfasern eingesetzt werden. Auch können die Fasern geordnet oder ungeordnet im Polymermaterial enthalten sein. Insbesondere bei Einsatz von Endlosfasern ist jedoch eine geordnete Anordnung üblich. Die Fasern können dabei zum Beispiel in Form von Einzelfasern, Fasersträngen, Matten, Geweben, Gestricken oder Rovings eingesetzt werden. Wenn die Fasern in Form von Endlosfasern, als Rovings oder als Fasermatte eingesetzt werden, so werden die Fasern üblicherweise in eine Form eingelegt und anschließend mit dem Polymermaterial umgossen. Die so hergestellte Felge kann einlagig oder mehrlagig aufgebaut sein. Bei einem mehrlagigen Aufbau können die Fasern der einzelnen Lagen jeweils gleichgerichtet sein oder die Fasern der einzelnen Lagen sind in einem Winkel von -90° bis +90° zueinander verdreht.

Als Kurzfasern werden im Rahmen der vorliegenden Erfindung Fasern mit einer Länge im Granulat von weniger als 5 mm verstanden. Langfasern sind Fasern in einem Granulat mit einer Länge im Bereich von 5 bis 30 mm, bevorzugt im Bereich von 7 bis 20 mm. Durch die Verarbeitung des Granulates werden die Langfasern im allgemeinen gekürzt, so dass diese im fertigen Bauteil im Allgemeinen eine Länge aufweisen, die im Bereich von 0,1 mm bis zur maximalen Abmessung des eingesetzten Granulates reichen kann. Bei üblicherweise eingesetzten Granulatgrößen liegt die maximale Länge im Bereich von bis zu 12 mm. Bei einem Granulat mit größeren Abmessungen kann die maximale Länge der Fasern auch darüber liegen.

Bevorzugt werden Langfasern eingesetzt. Bei Einsatz von Langfasern werden diese üblicherweise der Polymermasse vor dem Aushärten zugemischt. Der Grundkörper des Radkörpers kann zum Beispiel durch Extrusion, Spritzgießen oder Gießen gefertigt werden. Bevorzugt wird der gesamte Radkörper durch Spritzgießen oder Gießen gefertigt. Im Allgemeinen sind die Langfasern in dem Radkörper ungerichtet enthalten. Wenn der Radkörper durch ein Spritzgussverfahren hergestellt wird, kann sich eine Ausrichtung der Langfasern durch das Pressen der die Fasern enthaltenden Polymermasse durch eine Anspritzdüse in das Werkzeug ergeben. Der Anteil der Fasern in der Polymermasse liegt vorzugsweise bei 30 bis 70 Gew.-%, insbesondere bei 45 bis 65 Gew.-%.

In einer weiteren Ausführungsform enthält das Polymermaterial eine Mischung aus Kurzfasern und Langfasern. Dabei liegt der Anteil an Langfasern am Gesamtfaseranteil vorzugsweise bei 5 bis 95 Gew.-% und der Anteil an Kurzfasern entsprechend bei 95 bis 5 Gew.-%. Besonders bevorzugt liegt der Anteil an Langfasern bezogen auf den Gesamtfaseranteil im Bereich von 15 bis 85 Gew.-% und der Anteil an Kurzfasern entsprechend bei 85% bis bis 15 Gew.-%.

Zusätzlich zu den Fasern können auch beliebige andere Füllstoffe, die dem Fachmann bekannt sind und die steifigkeits- und/oder festigkeitserhöhend wirken, im Kunststoffmaterial enthalten sein. Hierzu zählen unter anderem auch beliebige Partikel ohne Vorzugsrichtung. Derartige Partikel sind im Allgemeinen kugelförmig, plättchenförmig oder zylindrisch. Die tatsächliche Form der Partikel kann dabei von der idealisierten Form abweichen. So können insbesondere kugelförmige Partikel in der Realität zum Beispiel auch tropfenförmig oder abgeflacht sein.

Neben Fasern eingesetzte Verstärkungsmaterialien sind zum Beispiel Graphit, Kreide, Talkum und nanoskalige Füllstoffe.

Besonders bevorzugt zur Verstärkung werden Glasfasern oder Kohlenstofffasern eingesetzt. Insbesondere bevorzugt als Material zur Herstellung der Felge sind glasfaserverstärkte Polyamide.

Wenn Polyamide zur Verstärkung eingesetzt werden, so ist es möglich, die Felge durch ein sogenanntes Polyamid-RIM-Verfahren herzustellen. Hierzu werden Endlosfasern in ein Werkzeug eingelegt und mit einer Monomerlösung getränkt. Anschließend wird die Monomerlösung zum Polymer ausgehärtet.

In einer besonders bevorzugten Ausführungsform enthält das Polymermaterial, aus dem das Rad gefertigt wird, 30 bis 70 Gew.-%, bevorzugt 35 bis 65 Gew.-% eines Polyamids oder einer Mischung aus mindestens zwei unterschiedlichen Polyamiden und 30 bis 70 Gew.-%, bevorzugt 45 bis 65 Gew.-% Glasfasern. Als Polyamide eignen sich insbesondere PA 6, PA 4.6, PA 6.6, PA 6.10, PA 6.12 oder teilaromatische Polyamide, beispielsweise PA 6.T/6, PA 6.T/11, PA 6.T/12, PA 6.T/6-3.T, PA 6.T/6.6, PA 6.T/6.I, PA 6.I/6.T, PA 6.T/5-I.T, PA 6.T/6.I/6.6, PA 6.T/6.I/11, PA 6.T/6.I/12, PA 6.T/6.I/6.10, PA 6.T/6.I/6.12, PA 9.T/8-I.T, PA 6.T/10.T, PA 10.T/6.T, PA 10.T/6-3.T, PA 6.T/6.I/10.T/10.1, PA 6.T/6.I/8.T/8.I, PA 6.T/6.I/PACM.T/PACM.I, PA 6.T/6.I/MACM.T/MACM.I, PA 6.T/6.12, PA 6.T/6.10, PA 8.T/8.6, PA 8.T/8.I, PA 6.T/6.I/MXD.T/MXD.I oder andere Terephthal- und/oder Isophthalsäure-haltige Polyamide, sowie deren Mischungen. Als Verstärkungsfasern werden vorzugsweise Glasfasern oder Kohlenstofffasern als Kurz- oder Langfasern sowie deren Mischungen eingesetzt. Der Querschnitt der Fasern ist dabei in bevorzugter Form rund, kann jedoch auch nicht runde, zum Beispiel ovale oder abgeflachte Querschnitte aufweisen.

Neben dem Polyamid und den Glasfasern enthält das bevorzugt eingesetzte Polymermaterial 0 bis 30 Gew.-%, bevorzugt 0 bis 15 Gew.-%, Schlagzähmodifier, 0 bis 1 Gew.-% eines kupferhaltigen Wärmestabilisators, zum Beispiel Cul/KI, 0 bis 5 Gew.-% eines Schwarzfarbstoffes, zum Beispiel Ruß, 0 bis 1 Gew.-% eines Schmier- bzw. Entformungsmittels, zum Beispiel N,N' Ethylenbisstearamid, beispielsweise Acrawax C®, 0 bis 1 Gew.-% eines phosphitischen (sekundären) Antioxidans, zum Beispiel Tris(2,4-di-(tert)-butylenphenyl)phosphit, beispielsweise Irgafos 168®, 0 bis 1 Gew.-% eines phenolischen (primären) Antioxidans zum Beispiel N,N'-Hexamethylenbis[3-(3,5-di-t-butyl-4-hydroyphenyl)propionamid], beispielsweise Irganox 1098®, 0 bis 1 Gew.-% eines gehinderten Amin-Stabilisators (HALS), zum Beispiel 1,3-Benzyldicarboxamid, N,N'-bis(2,2,6,6-tetramethyl-4-piperidinyl), beispielsweise erhältlich als Nylostab S-EED®).

Ferner können für eine erhöhte Wärmestabilisierung 0 bis 2 Gew.-% eines Polyethylenimin-Homopolymerisats oder -Copolymerisats, beispielsweise Lupasol WF®, sowie 0 bis 20 Gew.-% Eisenpulver enthalten sein. Bevorzugte Eisenpulver sind durch thermische Zersetzung von Eisenpentacarbonyl erhältlich.

Für eine antistatische Ausrüstung eignen sich ferner 0 bis 20 Gew.-% kohlenstoffhaltiger Additive, zum Beispiel Leitruß, Kohlenstoffnanoröhrchen, Kohlenstofffasern und "Vapor grown carbon nanotubes".

Als Schlagzähmodifier werden vorzugsweise Ethylen-Copolymere oder Ethylen-Methacrylsäurecopolymere eingesetzt. Das Ethylen-Copolymer kann dabei mit 0,1 bis 1 % Maleinsäureanhydrid funktionalisiert sein. Als Comonomere werden vorzugsweise 1-Buten und 1-Octen eingesetzt. Das Ethylen weist bei Verwendung von 1-Buten als Comonomer vorzugsweise einen Gewichtsanteil von 55 bis 85,7% und bei Verwendung von 1-Octen als Comonomer einen Gewichtsanteil von 50 bis 64,9% auf. Der Anteil an 1-Buten liegt entsprechend bei 14 bis 44 Gew.-% beziehungsweise der an 1-Octen bei 35 bis 49%. Als reaktive Säure kann Acrylsäure, Maleinsäure oder Maleinsäureanhydrid eingesetzt werden. Der Anteil der reaktiven Säure liegt vorzugsweise bei 0,3 bis 1 Gew.-%. Neben 1-Buten und 1-Octen eignet sich alternativ auch 1-Hexen als Comonomer.

### Beispiele für geeignete Polymermaterialien

Im Folgenden bedeutet Additivpaket 1, dass die Mischung 0,15 Gew.-% Cul/KI-Mischung, 1,64 Gew.-% Ruß, 0,25 Gew.-% Acrawax C® (N,N' Ethylenbisstearamid), 0,10 Gew.-% Irgafos 168® (Tris(2,4-di-(tert)-butylenphenyl)phosphit), 0,10 Gew.-% Irganox 1098® (N,N'-Hexamethylenbis[3-(3,5-di-t-butyl-4-hydroyphenyl)propionamid]), und 0,30 Gew.-% Nylostab S-EED® (N,N'-bis(2,2,6,6-tetramethyl-4-piperidinyl)) enthält.

Als Additivpaket 2 sind 0,25 Gew.-% Lupasol WF® (Polyethylenimin), und 1.0 Gew.-% Carbonyleisenpulver enthalten.

### Beispiel 1

Eine geeignete Polymermischung ist aufgebaut aus PA 6.6/6.10 in einem Verhältnis von 60/40 Gew.-%. Weiterhin enthalten sind 60 Gew.-% Langglasfaser, 4 Gew.-% Ethylen-Copolymer als Schlagzähmodifier, beispielsweise Fusabond® N416 sowie das Additivpaket 1.

### Beispiel 2

Eine weitere geeignete Polymermischung entspricht weitgehend der in Beispiel 1 beschriebenen. Jedoch sind anstelle der 4 Gew.-% Ethylen-Copolymer als Schlagzähmodifier 8 Gew.-% enthalten.

### Beispiel 3

Eine weitere alternative Polymermischung entspricht der in Beispiel 1, wobei anstelle der 60 Gew.-% Langglasfaser 40 Gew.-% Langglasfaser und 20 Gew.-% Kurzglasfaser enthalten sind.

### Beispiel 4

Eine weitere mögliche Polymermischung enthält PA 6.10 sowie 60 Gew.-% Langglasfasern. Zusätzlich ist auch hier das Additivpaket 1 enthalten.

### Beispiel 5

Eine weitere Polymermischung zur Herstellung des Rades entspricht der in Beispiel 4, jedoch sind zusätzlich als Schlagzähmodifier 4 Gew.-% Ethylen-Methacrylsäurecopolyer (90/10), neutralisiert zu ca. 70% mit Zink, beispielsweise Surlyn® 9520 enthalten.

### Beispiel 6

Eine weitere geeignete Polymermischung entspricht der Zusammensetzung in Beispiel 4, jedoch wird anstelle des PA 6.10 ein PA6.6 eingesetzt.

### Beispiel 7

Eine weitere geeignete Polymermischung entspricht der Zusammensetzung in Beispiel 6, wobei zusätzlich als Schlagzähmodifier 4 Gew.-% eines mit ca. 1 % Maleinsäureanhydrid funktionalisierten Ethylen-Copolymers, beispielsweise Fusabond N493®, enthalten sind.

### Beispiel 8

Eine weitere geeignete Polymermischung entspricht der in den Beispielen 4 und 6, jedoch wird als Polyamid ein PA 6.6/ 6I/6.T mit einem Mischungsverhältnis von 70:30 Gew.-% eingesetzt.

### Beispiel 9

Der Polymermischung aus Beispiel 8 wird in einer weiteren Ausführungsform 4 Gew.-% eines mit 0,5 bis 1% Maleinsäureanhydrid funktionalisiertes Ethylen-Copolymer, beispielsweise Exxelor® VA1803 als Schlagzähmodifier zugemischt.

### Beispiel 10

In einer weiteren Ausführungsform wird als Polymer ein PA 6.T/6 mit einer mittleren Viskositätszahl von 100 mL/g eingesetzt. Zusätzlich sind 60 Gew.-% Langglasfasern und das Additivpaket 1 enthalten.

### Beispiel 11

Der Polymermischung aus Beispiel 10 wird in einer weiteren alternativen Ausführungsform 4 % eines mit 0,2 bis 0,3 % Maleinsäureanhydrid funktionalisiertes Ethylen-Copolymer, beispielsweise Fusabond® NM 598 D als Schlagzähmodifier zugegeben.

### Beispiel 12

Eine weitere geeignete Polymermischung entspricht der aus Beispiel 1, wobei zusätzlich noch die Additivmischung 2 zugegeben wird..

### Beispiel 13

In einer weiteren Ausführungsform werden der Polyamidmischung aus Beispiel 6 zusätzlich das Additivpaket 2 sowie 6 Gew.-% PA6 zugemischt.

### Beispiel 14

Eine weitere geeignete Polymermischung entspricht der aus Beispiel 7, wobei zusätzlich das Additivpaket 2 und 6 Gew.-% PA6 zugemischt werden.

### Beispiel 15

Eine weitere alternative Polymermischung enthält PA 6.6/6.10 in einem Verhältnis von 60/40 Gew.-%, 56 Gew.-% Langglasfaser, 4 Gew.-% Ethylen-Copolymer als Schlagzähmodifier, beispielsweise Fusabond® N416, 4 Gew.-% Leitruß, beispielsweise Printex® XE2 der Evonik oder Chesacarb A sowie das Additivpaket 1.

### Beispiel 16

Eine weitere Polymermischung enthält PA 6.6/6.10 in einem Verhältnis von 60/40 Gew.-%, 58 Gew.-% Langglasfaser, 4 Gew.-% Ethylen-Copolymer als Schlagzähmodifier, beispielsweise Fusabond® N416, 2 Gew.-% Kohlenstoffnanoröhren, beispielsweise Nanocyl® NC 7000 und das Additivpaket 1.

### Beispiel 17

Eine weitere geeignete Polymermischung enthält PA 6.6/6.10 in einem Verhältnis von 60/40 Gew.-%,40 Gew.-% Langglasfaser, 4 Gew.-% Ethylen-Copolymer als Schlagzähmodifier, beispielsweise Fusabond® N416, 15 Gew.% Kohlenstofffaser, beispielsweise Tenax®-J / E, Type HT C604 sowie das Additivpaket 1.

### Beispiel 18

In einer weiteren Ausführungsform enthält die Polymermischung PA 6.6/6.10 in einem Verhältnis von 60/40 Gew.-%, 58 Gew.-% Langglasfasern, 4 Gew.-% Ethylen-Copolymer als Schlagzähmodifier, beispielsweise Fusabond® N416, 2 Gew.-% vapor grown carbon nanotubes, beispielsweise VGCF® oder VGCF®-H der Fa. Showa Denko, und das Additivpaket 1.

### Kurze Beschreibung der Figuren

Ausführungsbeispiele der Erfindung sind in den Figuren dargestellt und werden in der nachfolgenden Beschreibung näher erläutert.

Es zeigen:
- Figur 1: eine Explosionszeichnung einer Einheit mit Felge, Adapter und Radhalterung,
- Figur 2: eine Schnittdarstellung einer montierten Einheit mit Felge, Adapter und Radhalterung,
- Figur 3: eine Explosionszeichnung einer Einheit mit Felge und Adapter, wobei der Adapter einteilig mit einer Radhalterung ausgebildet ist,
- Figur 4: eine dreidimensionale Schnittdarstellung der Einheit aus Figur 3 in montiertem Zustand,
- Figuren 5 bis 8: Draufsichten auf Adapter in verschiedenen Ausführungsformen,
- Figur 9: eine Draufsicht auf einen Ausschnitt einer Felge mit mehreren erfindungsgemäßen Adaptern,
- Figur 10: eine Schnittdarstellung zur in Figur 9 dargestellten Draufsicht,
- Figur 11: eine Schnittdarstellung eines Felgenabschnitts mit einem Adapters mit einteilig daran ausgebildeter Hülse.

### Ausführungsbeispiele der Erfindung

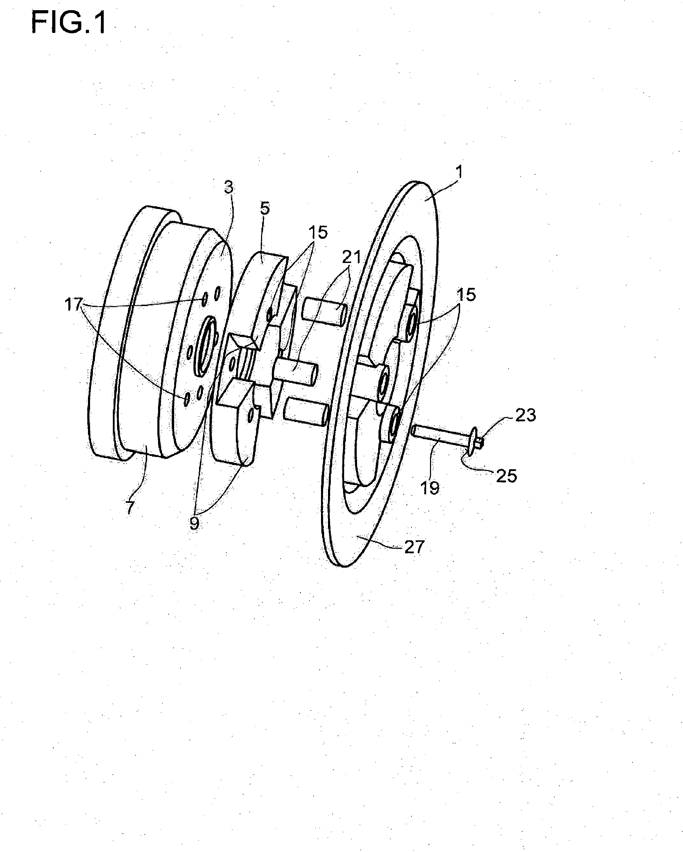

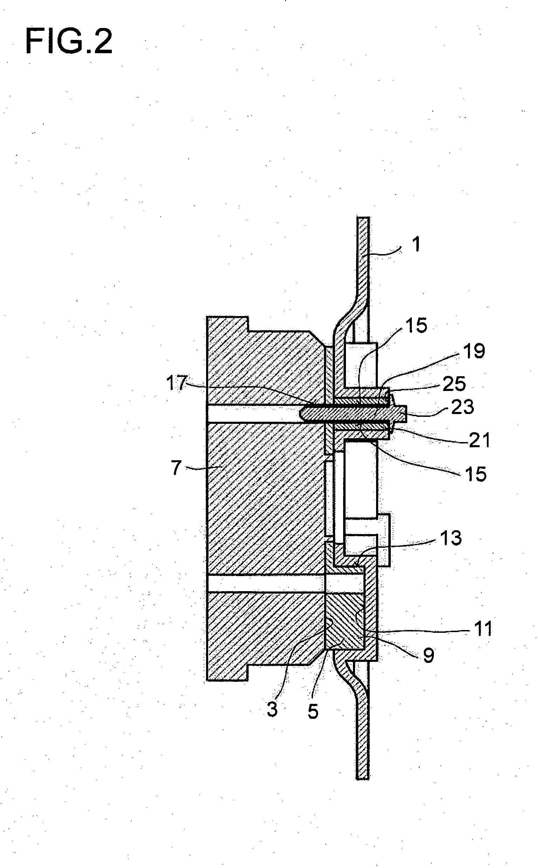

In Figur 1 ist eine Explosionszeichnung einer Einheit mit Felge, Adapter und Radhalterung dargestellt und in Figur 2 eine Schnittdarstellung der montierten Einheit.

Eine Felge 1, von der hier nur die Radscheibe ohne den Felgenkranz, der den Reifen aufnimmt, dargestellt ist, wird mit einer Radhalterung 3 verbunden. Bei herkömmlichen Felgen aus Metall wird die Kraft von der Radhalterung 3 an die Felge 1 durch Reibung übertragen. Aufgrund der geringeren Festigkeit von Kunststoffen und der Neigung, bei auftretenden Scherkräften zu kriechen, ist dies jedoch bei Felgen 1 aus Kunststoff nicht möglich. Die Felge 1 wird daher mit einem Adapter 5 an der Radhalterung 3 befestigt.

Die Radhalterung 3 ist zum Beispiel, wie hier dargestellt, eine Bremstrommel 7. Neben einer Bremstrommel 7 kann die Radhalterung 3 auch Teil einer Bremsscheibe sein. Auch ist es möglich, die Radhalterung 3 als Teil eines Elektromotors bei einem elektrisch angetriebenen Fahrzeug zu gestalten. Weiterhin ist es auch möglich, die Radhalterung 3 als Radnabe auszubilden.

Bei Einsatz einer Felge 1 aus Kunststoffmaterial wird die Kraft von der Radhalterung 3 durch den Adapter 5 mittels Formschluss an die Felge 1 übertragen. Hierzu sind am Adapter 5 Erhebungen 9 ausgebildet. Die Erhebungen 9 greifen nach Montage in Vertiefungen 11 an der Felge 1 ein. Die Kraftübertragung erfolgt dann von den Erhebungen 9 durch Formschluss an die Vertiefungen 11 in der Felge 1.

Um einen Formschluss zwischen den Erhebungen 9 des Adapters 5 und den Vertiefungen 11 in der Felge zu erhalten, sind die Seiten 13 der Erhebungen 9 und der Vertiefungen 11 vorzugsweise konisch gestaltet. Durch die konische Gestaltung können die Erhebungen 9 in die Vertiefungen 11 gepresst werden und es formstabile Verbindung von Erhebungen 9 und Vertiefungen 11 erzielt.

Die Befestigung der Felge 1 mit dem Adapter 5 an der Radhalterung 3 erfolgt vorzugsweise durch Verschraubungen. Hierzu sind in der Felge 1 und im Adapter 5 Schraubendurchgangsbohrungen 15 vorgesehen. In der Radhalterung 3 sind Bohrungen mit einem Innengewinde 17 ausgebildet. Zur Montage wird eine Schraube 19, vorzugsweise eine Flanschschraube, durch die Schraubendurchgangsöffnungen 15 in Felge 1 und Adapter 5 geführt und in der Bohrung mit Innengewinde 17 in der Radhalterung verschraubt.

Um die aus Kunststoff gefertigte Felge 1 bei der Montage nicht zu verformen, sind in die Schraubendurchgangsöffnungen 15 der Felge 1 vorzugsweise Buchsen 21 eingesetzt. Die Buchsen 21 sind dabei aus einem Material gefertigt, das sich durch Druckkraft, wie sie durch die Schraube 19 auf die Buchse ausgeübt wird, nicht verformt. Geeignetes Material für die Buchsen 21 sind zum Beispiel Metalle wie Eisen als Gusseisen oder als Stahl, Aluminium, Titan oder auch Keramiken.

Der Adapter 5 wird vorzugsweise, wie vorstehend bereits beschrieben aus einem Metall, einer Keramik oder einem hochgefüllten Kunststoff gefertigt, wobei das Material so ausgewählt wird, dass durch Kraftübertragung mittels Reibschluss keine Verformung des Adapters 5 beispielsweise durch Kriechen, erfolgt. Der Adapter 5 und die Buchsen 21 können aus dem gleichen Material gefertigt sein, es ist aber auch möglich, für Buchsen 21 und Adapter 5 unterschiedliche Materialien einzusetzen. Um eine stabile Verbindung zu erhalten, hat die Schraube 19 vorzugsweise einen Schraubenkopf 23 mit einer flachen Unterseite 25. Mit der Unterseite 25 wird der Schraubenkopf 23 gegen die Felge 1 gepresst und hierdurch eine stabile Verbindung erzielt.

Alternativ zu der in den Figuren 1 und 2 dargestellten Ausführungsform ist es auch möglich, die Vertiefungen 11 an der Außenseite 27 der Felge 1 vorzusehen. In diesem Fall liegt der Adapter mit einer Scheibe außen auf der Außenseite der Felge auf und die Erhebungen des Adapters weisen in Richtung der Radhalterung, so dass diese in die Vertiefungen der Felge eingreifen können. Um die Kraft von der Radhalterung auf den Adapter übertragen zu können, weist der Adapter zusätzlich mindestens eine Erhebung auf, die durch die Felge geführt wird und an der Radhalterung anliegt. Bevorzugt ist es, wenn die Erhebung mittig durch die Felge geführt wird.

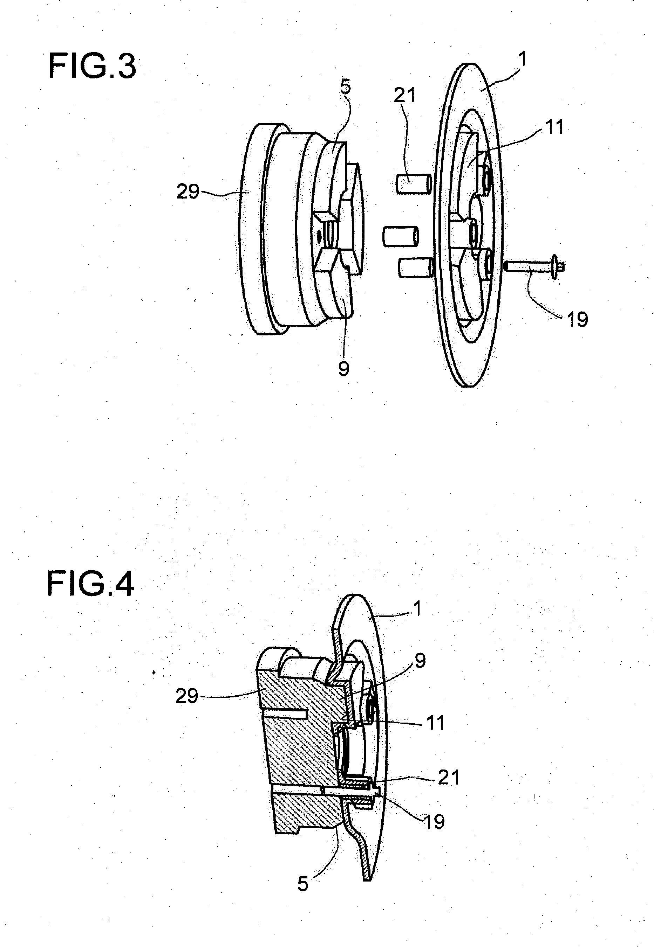

Weiterhin ist es auch möglich, den Adapter einteilig mit der Radhalterung zu gestalten. Dies ist in den Figuren 3 und 4 dargestellt.

In diesem Fall sind die Erhebungen 9 direkt an der Radhalterung 3, im Allgemeinen an der Nabe 29, ausgebildet. Alternativ kann der Adapter 5 in diesem Fall auch mit der Radhalterung 3 durch ein formschlüssiges Verfahren, beispielsweise durch Verschweißen, verbunden werden. Weiterhin ist es auch möglich, den Adapter 5 zunächst kraftschlüssig mit der Radhalterung 3 zu verbinden, beispielsweise durch Verschrauben, und anschließend die Felge mit dem Adapter 5 oder durch Schraubendurchgangsbohrungen 15 im Adapter 5 mit der Radhalterung 3 zu verbinden.

In einer weiteren Ausführungsform ist es auch möglich, den Adapter 5 einteilig mit der Felge zu gestalten. In diesem Fall können zum Beispiel die Buchsen 21 als Adapter 5 genutzt werden. Um eine ausreichend große Auflagefläche der Buchsen 21 an der Radhalterung 3 zu erhalten, ist es in diesem Fall bevorzugt, die Buchsen mit einer entsprechend großen Wanddicke zu gestalten oder alternativ eine tellerförmige Erweiterung an den Buchsen auf der der Radhalterung 3 zuweisenden Seite vorzusehen, mit der die Buchsen dann an der Radhalterung 3 anliegen. Alternativ kann aber auch der Adapter 5, wie er in den Figuren 1 und 2 dargestellt ist, einteilig mit der Felge 1 gestaltet werden, zum Beispiel indem der Adapter 5 vom Felgenmaterial in einem Spritzgussverfahren umspritzt wird. Bei einer einteiligen Gestaltung von Adapter 5 und Felge 1 kann eine stabile Verbindung zum Beispiel dadurch erzielt werden, dass am Adapter 5 Hinterschnitte vorgesehen sind, in die das Kunststoffmaterial der Felge 1 eingespritzt wird.

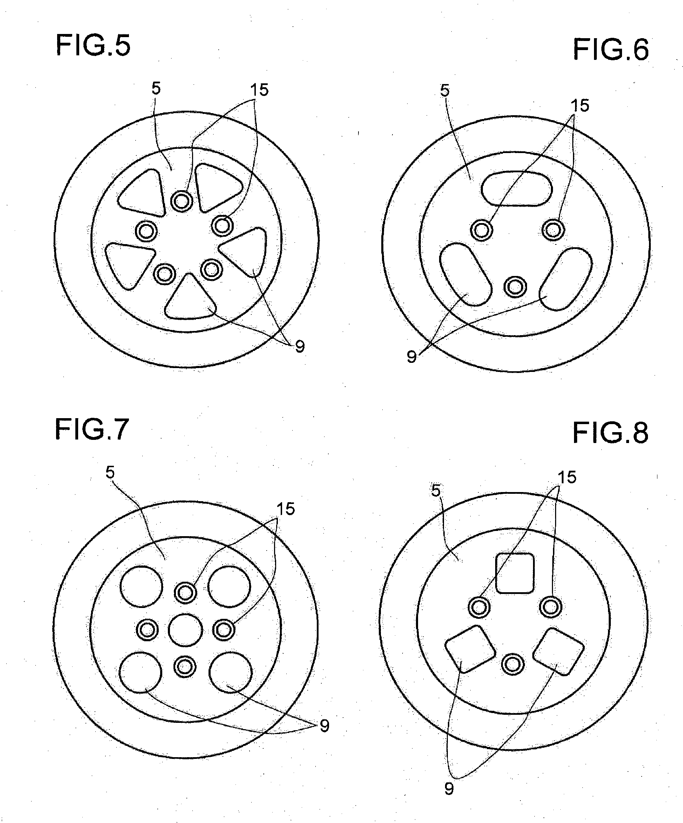

In den Figuren 3 bis 6 sind unterschiedliche Ausführungsformen für den Adapter 5 dargestellt. Je nach Größe der Felge und der Gestalt der Radhalterung 3 weist der Adapter 5 drei, vier oder fünf Schraubendurchgangsbohrungen 15 zur Befestigung der Felge 1 auf. Die Anzahl der Schraubendurchgangsbohrungen 15 ist dabei nicht an die Gestalt der Erhebungen 9, die in den Figuren 3 bis 6 dargestellt sind, gebunden. So ist es zum Beispiel möglich, anstelle der in Figur 3 dargestellten fünf Schraubendurchgangsbohrungen 15 und fünf dreieckförmigen Erhebungen 9 auch jeweils drei oder vier Schraubendurchgangsbohrungen 15 und drei oder vier Erhebungen 9 vorzusehen. Entsprechend können auch bei der in Figur 4 dargestellten Ausführungsform alternativ vier oder fünf Schraubendurchgangsbohrungen 15 und entsprechen genauso viele ovale Erhebungen 9 vorgesehen sein. Entsprechend gilt dies auch für die kreisförmigen Erhebungen 9, die in Figur 5 dargestellt sind und die quadratischen Erhebungen, die in Figur 6 gezeigt sind. Um zu vermeiden, dass an den Kanten und Ecken der Erhebungen bei trapezförmigen, dreieckigen, quadratischen oder beliebigen anderen Gestaltungen mit Ecken und Kanten Beschädigungen der Felge aufgrund hoher aufgebrachter Kräfte auftreten, sind die Kanten und Ecken der Erhebungen 9 vorzugsweise abgerundet.

Zusätzlich zu den hier in den Figuren 3, 4 und 6 dargestellten Erhebungen ist es möglich, zum Beispiel in der Mitte eine weitere, vorzugsweise Kreisförmige Erhebung vorzusehen.

Um eine gleichmäßige Kraftübertragung von dem Adapter 5 an die Felge 1 zu erhalten, ist es bevorzugt, wenn die Erhebungen 9, wie in den hier dargestellten Ausführungsformen, rotationssymmetrisch um den Mittelpunkt des Adapters 5 verteilt angeordnet sind. Dabei ist es nicht erforderlich, dass alle Erhebungen 9 den gleichen Abstand zum Mittelpunkt des Adapters aufweisen. Die Erhebungen 9 können auch in unterschiedlichem Abstand angeordnet sein, wobei es in diesem Fall bevorzugt ist, wenn jeweils mindestens 2 Erhebungen 9 den gleichen Abstand zum Mittelpunkt aufweisen und die Erhebungen 9 mit gleichem Abstand jeweils punktsymmetrisch um Mittelpunkt des Adapters 5 angeordnet sind.

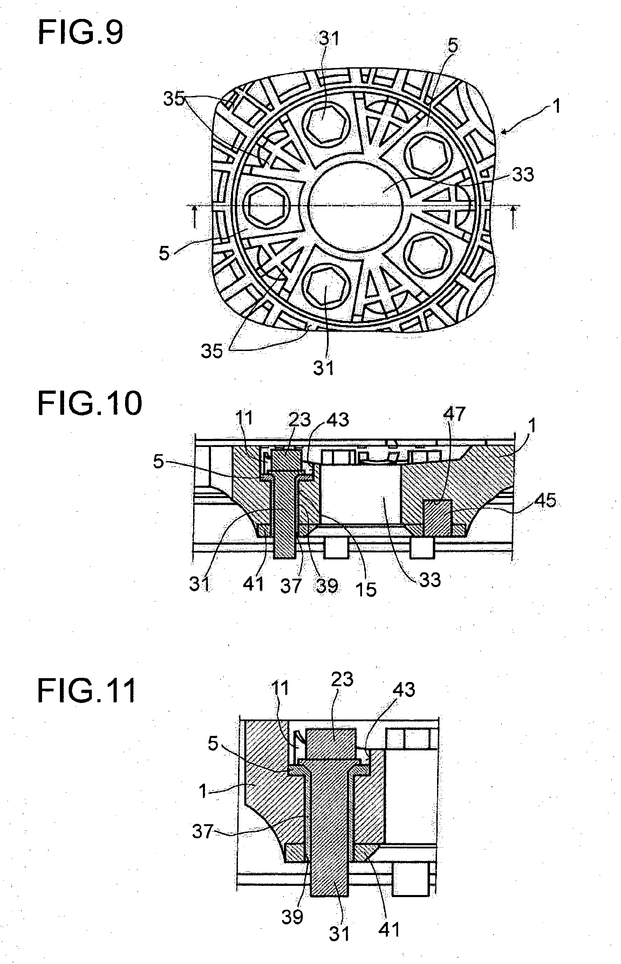

In Figur 9 ist eine Draufsicht auf einen Ausschnitt einer Felge mit mehreren erfindungsgemäßen Adaptern dargestellt.

Die Adapter 5 werden vorzugsweise rotationssymmetrisch um den Mittelpunkt des Adapters 5 verteilt angeordnet. Der Abstand zwischen jeweils zwei Adaptern 5 sollte dabei jeweils gleich groß sein. Besonders bevorzugt ist es dabei, wenn die Adapter 5 so angeordnet sind, dass immer ein Adapter 5 an einer Position ist, an der sich auch eine Durchgangsöffnung für eine Schraube 31 zur Befestigung der Felge 1 an einer Radhalterung befindet. Bei Einsatz mehrerer Adapter 5 sind die Adapter vorzugsweise jeweils in Form von Kreissegmenten gestaltet. Es ist aber auch jede beliebige andere Form einsetzbar. So können die Adapter 5 zum Beispiel auch als Polygon mit drei oder mehr Ecken gestaltet sein, wobei mindestens eine Seite des Polygons auch in Form einer Rundung ausgebildet sein kann. Die Rundung kann dabei sowohl konkav als auch konvex gestaltet sein. So sind die hier in Figur 9 dargestellten Adapter 5 als Polygon mit vier Ecken ausgebildet, wobei zwei gegenüberliegende Seiten keine Krümmung und die beiden anderen gegenüberliegenden Seiten jeweils eine Rundung aufweisen, wobei eine Rundung, nämlich die zur zentralen Öffnung 33 der Felge weisende, konkav ist und die Rundung der gegenüberliegenden Seite konvex.

Zur Verbesserung der Festigkeit und zur Gewichtsreduktion ist die hier im Ausschnitt dargestellte Felge 1 mit Rippen 35 versehen. Die Rippen 35 weisen dabei zum Teil sternförmig vom Mittelpunkt nach außen. Ein weiterer Teil der Rippen 35 ist in Umfangsrichtung ausgebildet.

Wenn die Adapter 5 jeweils in Verlängerung von Speichen der Felge 1 angeordnet sind, können die Adapter 5 einen hier nicht dargestellten Abschnitt aufweisen, der sich in Richtung der Speiche erstreckt. Hierzu ist es zum Beispiel möglich, den Adapter 5 in Richtung der Speiche zu verlängern. Der Abschnitt, der sich in Richtung der Speiche erstreckt kann dabei die gleiche Dicke aufweisen wie der Adapter 5 oder auch in einer geringeren Dicke gefertigt sein.

Figur 10 zeigt eine Schnittdarstellung zur in Figur 9 dargestellten Draufsicht. Dieser Darstellung lässt sich entnehmen, dass der Adapter 5 als Scheibe ausgebildet ist, die in der Vertiefung 11 der Felge 1 liegt. Der Adapter 5 ist einteilig mit einer Hülse 37 verbunden, die durch die Schraubendurchgangsbohrung 15 der Felge 1 geführt ist. Die Hülse 37 dient dabei zur zusätzlichen Verbesserung der Festigkeit der Felge. Mit dem von dem Adapter 5 weg weisenden Ende ist die Hülse 37 passgenau in einer Öffnung 39 einer Scheibe 41 aufgenommen. Die Scheibe 41 ist ringförmig ausgebildet und liegt auf der der Radhalterung zuweisenden Seite an der Felge 1 an. Die Scheibe 41 ist dabei vorzugsweise so gestaltet, dass diese nach der Montage mit einer umlaufenden Kante gleichmäßig an der Radhalterung anliegt. Hierzu ist es zum Beispiel möglich, die der Radhalterung zuweisende Seite der Scheibe konisch auszubilden, wobei bereits ein Konus mit einem sehr kleinen Öffnungswinkel ausreichend ist. Neben einer ringförmigen Scheibe 41, mit der alle eingesetzten Adapter 5 verbunden sind, ist es alternativ auch möglich, jedem Adapter 5 eine Scheibe zuzuordnen oder mehrere Scheiben vorzusehen, die jeweils mit mindestens zwei Adaptern 5 verbunden sind. Bevorzugt ist jedoch der Einsatz von nur einer Scheibe 41, die ringförmig die zentrale Öffnung 33 der Felge umschließt.

In der hier dargestellten Ausführungsform ist die Vertiefung 11, in der der Adapter 5 aufgenommen ist, tiefer als der Adapter, so dass der Adapter 5 vollständig in der Vertiefung liegt und die Seitenwandungen 43 der Vertiefung 11 über den Adapter hinausragen, so dass die Schraube 31 mit ihrem Schraubenkopf 23 ebenfalls in der Vertiefung aufgenommen ist. Der Adapter weist dabei eine an den verwendeten Schraubentyp angepasste Öffnung auf, so dass die Felge 1 mit herkömmlichen Radschrauben, zum Beispiel Kegelbundschrauben oder Kugelbundschrauben an der Radhalterung befestigt werden kann. In Figur 10 sind beispielhaft Kegelbundschrauben dargestellt.

Zur zusätzlichen Kraftübertragung von der Scheibe 41 an die Felge ist es möglich, neben den Hülsen 37 und den Schrauben 31 auch Bolzen 45 vorzusehen, die in entsprechende Sacklöcher 47 der Felge 1 eingreifen. Die Sacklöcher befinden sich dabei jeweils zwischen zwei Schraubendurchgangsbohrungen 15. Alternativ zu den Bolzen ist es auch möglich, die Scheibe mit Erhebungen mit einer beliebigen Form zu gestalten und in der Felge Vertiefungen vorzusehen, in die die Erhebungen eingreifen, so dass die Scheibe ebenfalls als Adapter wirkt.

Neben der einteiligen Ausbildung von Hülse 37 und Adapter 5, wie dies in Figur 10 dargestellt ist, ist es alternativ auch möglich, den Adapter 5 und die Hülse 37 als zwei Teile zu gestalten. In diesem Fall kann die Hülse wie bei der Scheibe 41 dargestellt, durch eine Öffnung im Adapter passgenau geführt sein oder alternativ und bevorzugt wie in Figur 11 dargestellt mit einer Stirnseite am Adapter 5 anliegen.

### Bezugszeichenliste

- 1: Felge
- 3: Radhalterung
- 5: Adapter
- 7: Bremstrommel
- 9: Erhebung
- 11: Vertiefung
- 13: Seite
- 15: Schraubendurchgangsbohrung
- 17: Bohrung mit Innengewinde
- 19: Schraube
- 21: Buchse
- 23: Schraubenkopf
- 25: Unterseite
- 27: Außenseite
- 29: Nabe
- 31: Schraube
- 33: zentrale Öffnung
- 35: Rippe
- 37: Hülse
- 39: Öffnung
- 41: Scheibe
- 43: Seitenwandung der Vertiefung 11
- 45: Bolzen
- 47: Sackloch

## Patentansprüche

1. Fahrzeugrad, umfassend eine Felge (1) aus einem Kunststoffmaterial sowie mindestens einen Adapter (5) zur Befestigung der Felge (1) an einer Radhalterung (3), wobei der mindestens eine Adapter (5) mindestens eine Erhebung (9) aufweist, die in eine Vertiefung (11) in der Felge (1) eingreift, oder mindestens ein Adapter (5) so gestaltet ist, dass dieser vollflächig in eine Vertiefung (11) der Felge eingreift, wobei der Adapter (5) so angeordnet ist, dass der Adapter (5) nach Montage der Felge (1) an der Radhalterung (3) zwischen Felge (1) und Radhalterung (3) positioniert ist, oder wobei der Adapter (5) so angeordnet ist, dass die Felge (1) zwischen Radhalterung (3) und Adapter (5) positioniert ist, so dass der Adapter (5) nach der Montage außen auf der Felge (1) aufliegt, oder wobei der Adapter (5) vom Kunststoffmaterial der Felge (1) umschlossen ist, wobei das Fahrzeugrad mehrere Adapter (5) aufweist, **dadurch gekennzeichnet, dass** jeder Adapter (5) als Kreissegment ausgebildet ist.

2. Fahrzeugrad gemäß Anspruch 1, **dadurch gekennzeichnet, dass** bei einer Positionierung der Adapter (5) in Verlängerung von Speichen der Felge (1), der Adapter (5) einen Abschnitt, der sich in Richtung der Speiche erstreckt, zur Verstärkung der Speiche aufweist.

3. Fahrzeugrad gemäß Anspruch 1, **dadurch gekennzeichnet, dass** bei Positionierung des Adapters (5) zwischen Radhalterung (3) und Felge (1) der Adapter (3) ein separates Bauteil ist, das mit seiner der Felge (1) abgewandten Seite nach Montage an der Radhalterung (3) anliegt.

4. Fahrzeugrad gemäß einem der Ansprüche 1 bis 3, **dadurch gekennzeichnet, dass** jeweils ein Adapter (5) an jeder Position angeordnet ist, an der eine Durchgangsbohrung zur Verschraubung der Felge (1) mit der Radhalterung (3) ausgebildet ist.

5. Fahrzeugrad gemäß einem der Ansprüche 1 bis 4, **dadurch gekennzeichnet, dass** die Erhebungen (9) des Adapters (5) und die Vertiefungen (11) der Felge (1) jeweils konisch ausgebildet sind, so dass die Erhebungen (9) des Adapters (5) bei der Montage in die Vertiefungen (11) der Felge (1) gepresst werden.

6. Fahrzeugrad gemäß einem der Ansprüche 1 bis 5, **dadurch gekennzeichnet, dass** der Adapter (5) aus einem Material gefertigt ist, das eine Kraftübertragung durch Reibung zwischen Radhalterung (3) und Adapter (5) ermöglicht.

7. Fahrzeugrad gemäß einem der Ansprüche 1 bis 6, **dadurch gekennzeichnet, dass** der Adapter (5) aus einem metallischen Werkstoff, aus Keramik oder einem hochgefüllten Kunststoff gefertigt ist.

8. Fahrzeugrad gemäß einem der Ansprüche 1 bis 7, **dadurch gekennzeichnet, dass** das Material für die Felge (1) und den Adapter (5) so ausgewählt wird, dass sich die thermischen Längenausdehnungskoeffizienten des Materials für die Felge (1) und des Materials für den Adapter (5) um nicht mehr als 70% unterscheiden, bezogen auf den thermischen Längenausdehnungskoeffizienten des Materials für den Adapter (5).

9. Fahrzeugrad gemäß einem der Ansprüche 1 bis 8, **dadurch gekennzeichnet, dass** das Kunststoffmaterial der Felge (1) ausgewählt ist aus Polybutylenterephthalat, Polyethylensulfon, Polysulfon, Polypropylen oder Polyamid.

10. Fahrzeugrad gemäß einem der Ansprüche 1 bis 9, **dadurch gekennzeichnet, dass** das Kunststoffmaterial der Felge (1) verstärkt ist.

11. Fahrzeugrad gemäß Anspruch 10, **dadurch gekennzeichnet, dass** zur Verstärkung des Kunststoffmaterials der Felge (1) Kurzfasern, Langfasern oder Endlosfasern eingesetzt werden.

12. Fahrzeugrad gemäß Anspruch 11, **dadurch gekennzeichnet, dass** das Material der Fasern ausgewählt ist aus Kohlenstoff, Glas, Aramid, Basalt, einem Metall oder einem Mineral.

## Claims

1. A vehicle wheel, comprising a rim (1) of a plastics material and at least one adapter (5) for fastening the rim (1) to a wheel mounting (3), the at least one adapter (5) having at least one protuberance (9) which engages in a recess (11) in the rim (1), or at least one adapter (5) is formed such that it engages in a recess (11) of the rim over its full surface area, the adapter (5) being arranged in such a way that, after assembly of the rim (1) on the wheel mounting (3), the adapter (5) is positioned between the rim (1) and the wheel mounting (3), or the adapter (5) being arranged in such a way that the rim (1) is positioned between the wheel mounting (3) and the adapter (5), so that the adapter (5) lies on the outside of the rim (1) after assembly, or the adapter (5) being enclosed by the plastics material of the rim (1), the vehicle wheel having multiple adapters (5), wherein each adapter (5) is formed as a segment of a circle.

2. The vehicle wheel according to claim 1, wherein, with the adapters (5) positioned as an extension of the spokes of the rim (1), the adapter (5) has a portion that extends in the direction of the spoke, for strengthening the spoke.

3. The vehicle wheel according to claim 1, wherein, with the adapter (5) positioned between the wheel mounting (3) and the rim (1), the adapter (3) is a separate component which, after assembly, lies with its side that is facing away from the rim (1) against the wheel mounting (3).

4. The vehicle wheel according to one of claims 1 to 3, wherein an adapter (5) is respectively arranged at every position at which a through-hole for screwing the rim (1) to the wheel mounting (3) is formed.

5. The vehicle wheel according to one of claims 1 to 4, wherein the protuberances (9) of the adapter (5) and the recesses (11) of the rim (1) are in each case conically formed, so that, during assembly, the protuberances (9) of the adapter (5) are pressed into the recesses (11) of the rim (1).

6. The vehicle wheel according to one of claims 1 to 5, wherein the adapter (5) is produced from a material which allows a force transmission between the wheel mounting (3) and the adapter (5) by friction.

7. The vehicle wheel according to one of claims 1 to 6, wherein the adapter (5) is produced from a metallic material, from ceramic or a highly filled plastic.

8. The vehicle wheel according to one of claims 1 to 7, wherein the material for the rim (1) and the adapter (5) is chosen such that the coefficients of linear thermal expansion of the material for the rim (1) and of the material for the adapter (5) differ by no more than 70%, on the basis of the coefficient of linear thermal expansion of the material for the adapter (5).

9. The vehicle wheel according to one of claims 1 to 8, wherein the plastics material of the rim (1) is chosen from polybutylene terephthalate, polyethylene sulfone, polysulfone, polypropylene or polyamide.

10. The vehicle wheel according to one of claims 1 to 9, wherein the plastics material of the rim (1) is reinforced.

11. The vehicle wheel according to claim 10, wherein short fibers, long fibers or continuous fibers are used for reinforcing the plastics material of the rim (1).

12. The vehicle wheel according to claim 11, wherein the material of the fibers is chosen from carbon, glass, aramid, basalt, a metal or a mineral.

## Revendications

1. Roue de véhicule, comprenant une jante (1) en matière plastique et au moins un adaptateur (5) pour fixer la jante (1) sur une fixation de roue (3), l'au moins un adaptateur (5) présentant au moins un rehaussement (9) qui s'engage dans un renfoncement (11) dans la jante (1), ou au moins un adaptateur (5) étant configuré de telle sorte que celui-ci s'engage sur toute sa surface dans un renfoncement (11) de la jante, l'adaptateur (5) étant disposé de telle sorte que l'adaptateur (5), après le montage de la jante (1), soit positionné sur la fixation de roue (3) entre la jante (1) et la fixation de roue (3), ou l'adaptateur (5) étant disposé de telle sorte que la jante (1) soit positionnée entre la fixation de roue (3) et l'adaptateur (5), de telle sorte que l'adaptateur (5), après le montage, repose à l'extérieur sur la jante (1), ou l'adaptateur (5) étant entouré par la matière plastique de la jante (1), la roue de véhicule présentant plusieurs adaptateurs (5), **caractérisée en ce que** chaque adaptateur (5) est réalisé sous forme de segment de cercle.

2. Roue de véhicule selon la revendication 1, **caractérisée en ce que** lors d'un positionnement des adaptateurs (5) dans le prolongement des rayons de la jante (1), l'adaptateur (5) présente une portion qui s'étend dans la direction du rayon, afin de renforcer le rayon.

3. Roue de véhicule selon la revendication 1, **caractérisée en ce que** lors du positionnement de l'adaptateur (5) entre la fixation de roue (3) et la jante (1), l'adaptateur (3) est un composant séparé qui s'applique avec son côté opposé à la jante (1) après le montage contre la fixation de roue (3).

4. Roue de véhicule selon l'une quelconque des revendications 1 à 3, **caractérisée en ce qu'**un adaptateur (5) est à chaque fois disposé à chaque position à laquelle un alésage traversant est réalisé pour le vissage de la jante (1) à la fixation de roue (3).

5. Roue de véhicule selon l'une quelconque des revendications 1 à 4, **caractérisée en ce que** les rehaussements (9) de l'adaptateur (5) et les renfoncements (11) de la jante (1) sont à chaque fois réalisés sous forme conique, de telle sorte que les rehaussements (9) de l'adaptateur (5), lors du montage, soient pressés dans les renfoncements (11) de la jante (1).

6. Roue de véhicule selon l'une quelconque des revendications 1 à 5, **caractérisée en ce que** l'adaptateur (5) est fabriqué en un matériau qui permet un transfert de force par friction entre la fixation de roue (3) et l'adaptateur (5).

7. Roue de véhicule selon l'une quelconque des revendications 1 à 6, **caractérisée en ce que** l'adaptateur (5) est fabriqué en un matériau métallique, en céramique ou en plastique fortement chargé.

8. Roue de véhicule selon l'une quelconque des revendications 1 à 7, **caractérisée en ce que** le matériau de la jante (1) et de l'adaptateur (5) est choisi de telle sorte que les coefficients de dilatation thermique longitudinaux du matériau de la jante (1) et du matériau de l'adaptateur (5) ne soient pas différents de plus de 70 % par rapport au coefficient de dilatation thermique longitudinal du matériau de l'adaptateur (5).

9. Roue de véhicule selon l'une quelconque des revendications 1 à 8, **caractérisée en ce que** la matière plastique de la jante (1) est choisie parmi du polybutylène-téréphtalate, du polyéthylène sulfone, du polysulfone, du polypropylène, ou du polyamide.

10. Roue de véhicule selon l'une quelconque des revendications 1 à 9, **caractérisée en ce que** la matière plastique de la jante (1) est renforcée.

11. Roue de véhicule selon la revendication 10, **caractérisée en ce que** pour le renforcement de la matière plastique de la jante (1), on utilise des fibres courtes, des fibres longues ou des fibres sans fin.

12. Roue de véhicule selon la revendication 11, **caractérisée en ce que** le matériau des fibres est choisi parmi le carbone, le verre, l'aramide, le basalte, un métal ou un minéral.
